(19) Europäisches Patentamt
European Patent Office
Office européen des brevets

(11) **EP 3 088 913 B1**

(12) **FASCICULE DE BREVET EUROPEEN**

(45) Date de publication et mention
de la délivrance du brevet:
**13.05.2020 Bulletin 2020/20**

(51) Int Cl.:
***G01S 13/72*** *(2006.01)*  ***G01S 7/35*** *(2006.01)*
***G01S 11/10*** *(2006.01)*  ***G01S 13/58*** *(2006.01)*

(21) Numéro de dépôt: **16167310.8**

(22) Date de dépôt: **27.04.2016**

(54) **PROCÉDÉ DE SUIVI D'UNE CIBLE MOBILE AU MOYEN D'UN MODÈLE A PRIORI**

VERFAHREN ZUR NACHVERFOLGUNG EINES MOBILEN ZIELS MITHILFE EINES
A-PRIORI-MODELLS

METHOD FOR TRACKING A MOVING TARGET USING AN A PRIORI MODEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.04.2015 FR 1553856**

(43) Date de publication de la demande:
**02.11.2016 Bulletin 2016/44**

(73) Titulaire: **ZODIAC DATA SYSTEMS**
**91940 Les Ulis (FR)**

(72) Inventeur: **VARIERAS, François**
**14740 Bretteville L'orgueilleuse (FR)**

(74) Mandataire: **Regimbeau**
**20, rue de Chazelles**
**75847 Paris Cedex 17 (FR)**

(56) Documents cités:
**EP-A1- 0 395 480    WO-A2-2006/087421**

- **MARKKANEN J: "Towards Routine Real-time
Space Debris Measurements with EISCAT",
PROCEEDINGS OF THE EUROPEAN
CONFERENCE ON SPACE DEBRIS, 18 avril 2005
(2005-04-18), pages 67-72, XP002383486,**

**Description**

DOMAINE GENERAL

L'invention se rapporte de façon générale au domaine du suivi d'une cible mobile au moyen d'un récepteur Doppler.

ETAT DE L'ART

Pour mesurer la vitesse d'une cible mobile, il est connu d'utiliser un radar Doppler.

Un radar Doppler est un dispositif qui émet une onde de fréquence déterminée vers une cible mobile. Cette onde est réfléchie par la cible, puis est reçue par un capteur du radar adapté à cet effet.

Le mouvement de la cible mobile induit un décalage en fréquence entre l'onde émise et l'onde reçue après réflexion, décalage en fréquence communément appelé fréquence Doppler. La vitesse radiale du mobile peut ensuite être estimée à partir de cette fréquence Doppler.

Les fréquences Doppler mesurées par un radar Doppler peuvent cependant être entachées d'erreurs quand la cible présente une accélération ou une décélération rapide.

Pour remédier ce problème, il a été proposé dans le document EP 0395480 de mettre en œuvre une correction du signal fréquentiel acquis par un radar Doppler au moyen d'un signal approché généré à partir d'un lissage de mesures antérieures.

Ce signal approché est recalculé itérativement pour chaque nouvelle mesure de fréquence acquise par le radar Doppler, pendant que la cible se meut.

Or, de tels calculs itératifs sont relativement complexes à mettre en œuvre et requièrent une charge de calcul particulièrement élevée.

Le document WO 2006/087421 et le document intitulé « Towards Routine real-time space debris measurements with EISCAT » (XP-002383486, par Jussi Markkanen) visent tous deux à réduire la charge de calcul importante requise pour le suivi simultané de plusieurs cibles (par exemple des débris spatiaux). Pour ce faire, ces documents proposent de mettre en œuvre des calculs de FFT qui sont limités à des portions non nulles de signaux de mesures. Toutefois, ce traitement ne vise pas spécifiquement la mesure de vitesse en s'aidant de lois cinématiques approchées pour chaque cible.

PRESENTATION DE L'INVENTION

Un but de l'invention est de réduire la charge de calcul sollicitée pour corriger des biais de mesure induits par le récepteur Doppler.

Afin d'atteindre ce but l'invention propose un procédé de suivi d'une cible mobile, comprenant des étapes de :

- acquisition d'un signal de fréquence Doppler caractérisant la vitesse radiale de la cible,
- génération d'au moins un signal de fréquence Doppler de référence à partir d'au moins une évolution temporelle attendue de la fréquence Doppler, l'évolution temporelle attendue de la fréquence Doppler étant calculée à partir d'un modèle cinématique de la cible,
- génération d'un signal de battement entre le signal de fréquence Doppler acquis et chaque signal de fréquence Doppler de référence, chaque signal de battement étant représentatif d'un écart de fréquence entre le signal de fréquence Doppler mesuré et le signal de fréquence Doppler de référence correspondant,
- application au signal de battement d'au moins une transformée de Fourier produisant un spectre fréquentiel du signal de battement,
- estimation d'un signal de vitesse de la cible à partir du spectre fréquentiel,

dans lequel l'évolution temporelle attendue est déterminée avant l'acquisition du signal de fréquence Doppler.

Ce procédé peut être complété par les caractéristiques suivantes prises seules ou en combinaisons lorsque cela est techniquement possible :

- le modèle cinématique est défini par des équations différentielles faisant intervenir la position, la vitesse et/ou l'accélération de la cible en fonction du temps, et dont la résolution permet de prédire l'évolution de la fréquence Doppler en fonction de conditions initiales ;
- la génération du signal de battement comprend une multiplication réelle ou complexe entre le signal de fréquence Doppler acquis et un signal dont la phase résulte d'une intégration du signal de fréquence Doppler de référence ;
- la génération du signal de battement complexe comprend un filtrage passe-bas appliqué à au moins une composante du signal résultant de la multiplication réelle ou complexe, le filtrage étant adapté pour conserver uniquement les fréquences représentatives d'un écart entre les deux signaux de fréquence Doppler ;

- le procédé comprend un échantillonnage du signal de battement avant l'application de la transformée de Fourier ;
- le procédé comprend un fenêtrage du signal de battement produisant un bloc d'échantillons du signal de battement, la transformée de Fourier étant appliquée sélectivement au bloc d'échantillons produit par le fenêtrage ;
- le procédé comprend la détection d'un pic de puissance Doppler présent dans le spectre fréquentiel obtenu par l'application de la transformée de Fourier, le signal de vitesse de la cible étant estimé à partir des coordonnées du pic de puissance Doppler détecté ;
- la transformée de Fourier est appliquée successivement à différents blocs d'échantillons extraits du signal de battement, chaque bloc comprenant des échantillons en commun avec un bloc précédent ;
- le signal de référence est un signal discret ;
- le signal de fréquence Doppler acquis est un signal discret défini par une première fréquence d'échantillonnage et le signal de fréquence Doppler de référence est un signal discret défini par une deuxième fréquence d'échantillonnage inférieure à la première fréquence d'échantillonnage, le signal de fréquence Doppler de référence étant interpolé pour produire un nouveau signal de fréquence Doppler à partir duquel est généré le signal de battement à la première fréquence d'échantillonnage.

Il est par ailleurs proposé selon un deuxième aspect un dispositif de suivi d'une cible mobile, comprenant:

- un récepteur Doppler adapté pour acquérir un signal de fréquence Doppler caractérisant la vitesse radiale de la cible,
- une mémoire mémorisant, avant l'acquisition du signal Doppler par le récepteur Doppler, au moins une évolution temporelle attendue de la fréquence Doppler, l'évolution temporelle étant calculée à partir d'un modèle cinématique de la cible,
- une unité de traitement de signal adaptée pour :

  o générer au moins un signal de fréquence Doppler de référence à partir de l'évolution temporelle mémorisée,
  o générer un signal de battement entre un signal de fréquence Doppler acquis par le récepteur et chaque signal de fréquence Doppler de référence, chaque signal de battement étant représentatif d'un écart de fréquence entre le signal de fréquence Doppler acquis et le signal de fréquence Doppler de référence correspondant,
  o appliquer au signal de battement au moins une transformée de Fourier produisant un spectre fréquentiel du signal de battement,
  o estimer un signal de vitesse de la cible à partir du spectre fréquentiel.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente de façon schématique un dispositif de suivi de cible selon un mode de réalisation de l'invention ;
- la figure 2 est un diagramme fonctionnel d'une unité de traitement comprise dans le dispositif de suivi représenté sur la figure 1 ;
- la figure 3 est un organigramme d'étapes d'un procédé de suivi de cible selon un mode de réalisation de l'invention.

Sur l'ensemble des figures, les éléments similaires portent des références identiques.

## DESCRIPTION DETAILLEE DE L'INVENTION

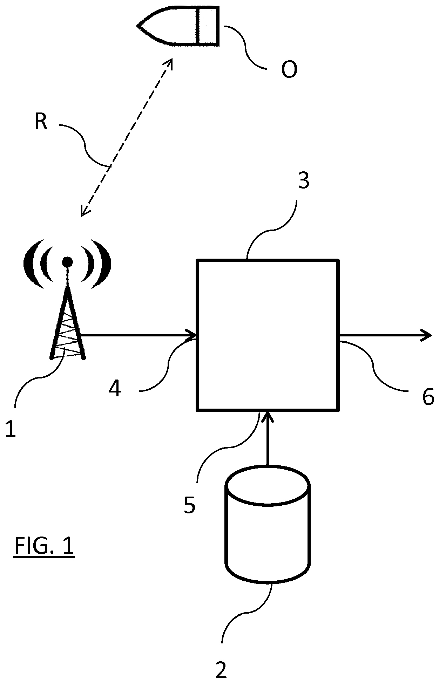

En référence à la figure 1, un dispositif de suivi d'une cible mobile O comprend un récepteur Doppler 1, une mémoire 2, et une unité de traitement de signal 3.

Le récepteur Doppler 1 est adapté pour acquérir un signal de fréquence Doppler caractérisant la vitesse radiale de la cible, c'est-à-dire la vitesse selon un axe R passant par un point du récepteur 1 et un point de la cible O. Le récepteur Doppler est par exemple celui d'un radar Doppler.

La mémoire 2 est adaptée pour mémoriser, avant l'acquisition d'un signal Doppler par le récepteur Doppler 1, au moins une évolution temporelle attendue de la fréquence Doppler, l'évolution temporelle étant calculée à partir d'un modèle cinématique de la cible.

La mémoire 2 peut prendre la forme d'un ou plusieurs composants de mémorisation de types variés : disque dur, disque SSD, flash, etc. Les composants de mémoire peuvent être de type amovibles à chaud via une connectique USB.

L'unité de traitement de signal 3 comprend une entrée principale 4 raccordée au récepteur Doppler, une entrée auxiliaire 5 raccordée à la mémoire 2, et une sortie 6.

L'unité de traitement de signal 3 a accès en lecture, voire en écriture, à la mémoire via l'entrée auxiliaire 5.

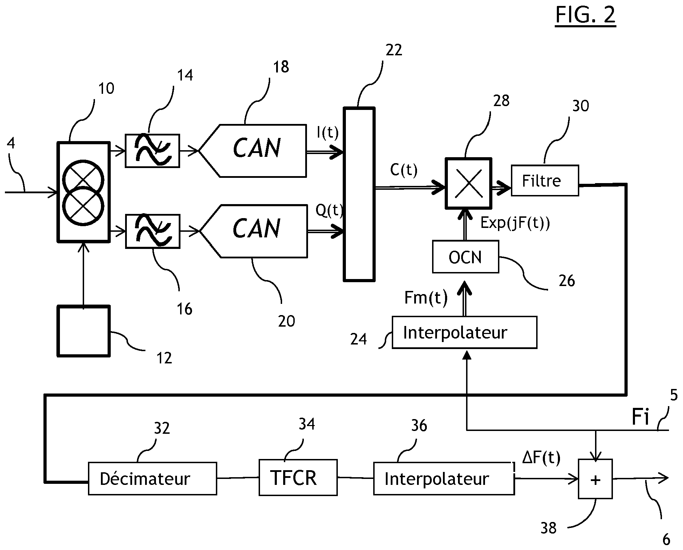

En référence à la figure 2, l'unité de traitement de signal 3 comprend différents blocs de traitement de signal entre ses deux entrées 4, 5 et sa sortie 6.

L'unité de traitement de signal 3 comprend plus précisément un mélangeur 10 en quadrature raccordée à l'entrée principale, et comprenant deux voies de sortie parallèles : une voie en phase I, et une voie en quadrature Q.

Le mélangeur 10 est contrôlé par un oscillateur local 12.

Chacune des deux voies comprend un filtre passe-bas analogique 14, 16 et un convertisseur analogique-numérique 18, 20 en sortie du filtre passe-bas analogique correspondant (désigné conventionnellement par l'acronyme CAN).

L'unité de traitement de signal 3 comprend en outre un bloc 22 dit « bloc complexe », agencé en sortie des deux convertisseurs analogique-numérique. Le bloc complexe 22 est configuré pour produire un signal complexe à partir de deux signaux reçus des deux convertisseurs analogique-numérique 18, 20.

L'unité de traitement de signal 3 comprend également un interpolateur 24 raccordé à l'entrée auxiliaire 6, et un oscillateur contrôlé en numérique 26 (OCN) agencé en sortie de l'interpolateur 24.

L'unité de traitement de signal 3 comprend en outre un multiplicateur complexe 28 agencé en sortie du bloc complexe et de l'oscillateur contrôlé en numérique 26.

L'unité de traitement de signal 3 comprend en outre les composants suivants agencés en série en sortie du multiplicateur complexe 28 :

- un filtre numérique 30 recevant des données produites par le multiplicateur complexe 28 ;
- un bloc de décimation, ou décimateur 32, agencé en sortie du filtre numérique 30;
- un bloc 34 dit bloc « TFCR » configuré pour appliquer une transformée de Fourier aux données produites par le bloc de décimation ;
- un interpolateur 36 agencé en sortie du bloc TFCR.

L'unité de traitement de signal 3 comprend également un additionneur 38 prenant en entrée la sortie de l'interpolateur mais également les données reçues via l'entrée auxiliaire du dispositif.

La sortie 6 de l'unité de traitement de signal 2 est agencée pour recevoir les données additionnées par l'additionneur 38.

On distingue deux phases au cours de la mise en œuvre d'un procédé de suivi de cible mis en œuvre au moyen du dispositif de suivi:

- une phase préliminaire à la mise en fonctionnement du récepteur Doppler, voire au tir de la cible, au cours de laquelle au moins un signal de référence est généré.
- une phase de traitement d'un signal mesuré par le récepteur Doppler, ce traitement faisant intervenir les signaux de référence générés au cours de la phase préliminaire.

*Phase préliminaire*

On choisit un modèle cinématique représentatif du comportement de la cible O dont on veut suivre la trajectoire au moyen du dispositif de suivi.

Le modèle cinématique est défini typiquement par des équations différentielles faisant intervenir la position, la vitesse et/ou l'accélération de la cible en fonction du temps, et dont la résolution permet de prédire l'évolution f(t) de la fréquence Doppler en fonction de conditions initiales.

On considérera dans la suite comme exemple non limitatif de cible O un obus tiré par un canon.

Soient :

- Vr(t) la vitesse apparente de la cible à l'instant t (dite vitesse relative) du modèle,
- c' la vitesse de propagation de l'onde à fréquence porteuse Fo (10GHz par exemple) dans le milieu considéré (l'air par exemple), que l'on considère comme une constante proche de la célérité c de la lumière dans le vide,
- Vo la vitesse initiale de tir (en pratique la vitesse de sortie de l'obus hors du canon). Cette vitesse initiale est généralement déterminable à l'avance grâce à des tables balistiques propres à chaque canon, et dépend de la charge, de la masse de la cible tirée par le canon, de la hausse et de l'usure du canon.
- C le Cx axial de l'obus, supposé constant;
- g est la constante d'attraction terrestre (9.81 m/s$^2$),
- x(t) et y(t) sont les coordonnées cartésiennes de la cible dans le plan vertical contenant l'axe de tir,

- Vx, Vy sont les dérivées premières respectives de x et y
- Ax et Ay sont les dérivées secondes de x et y
- H est la hausse canon au moment du tir.

On pose :

$$f(t) = 2 * Vr(t)/c' * Fo$$

On résout le système d'équations différentielles suivantes pour générer l'évolution temporelle attendue.

- x(0)=0
- y(0)=0
- Vx(0)=Vo*cos(H)
- Vy(0)=Vo*sin(H)
- $Ax(t)=-C*Vx*racine(Vx^2+Vy^2)$
- $Ay(t)=-C*Vy*racine(Vx^2+Vy^2)-g$
- $Vr(t)=(x*Vx+y*Vy)/racine(x^2+y^2)$

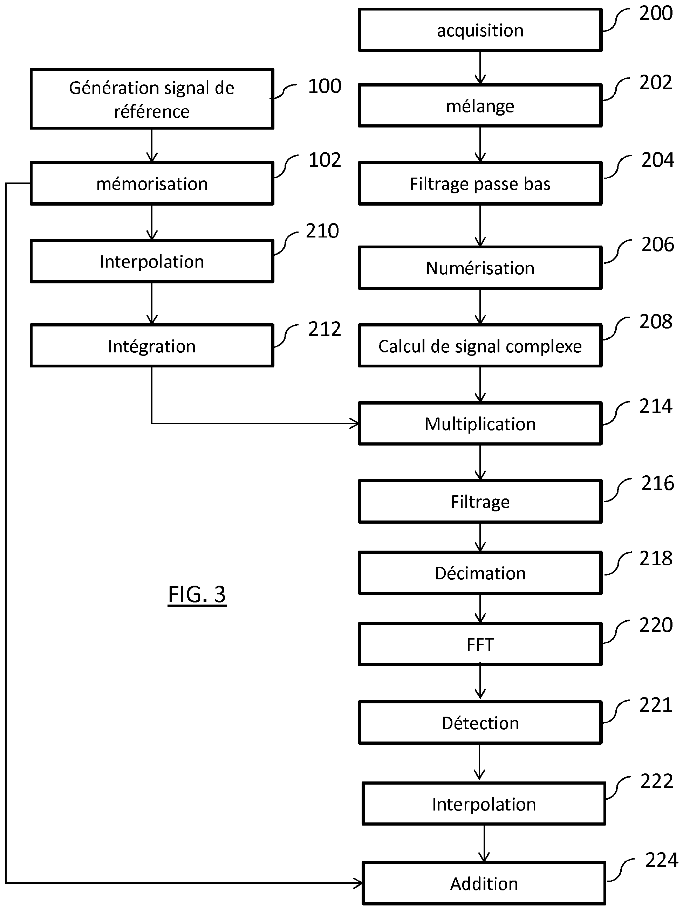

En référence à la figure 3, dans une étape 100, on génère au moins un signal de fréquence Doppler de référence Fi à partir de l'évolution temporelle attendue. L'évolution temporelle attendue est ainsi déterminée « a priori », c'est-à-dire indépendamment d'un signal Doppler reçu par le récepteur Doppler.

Dans une étape 102, le signal témoin est mémorisé dans la mémoire 2 du dispositif de suivi.

Le signal témoin peut être mémorisé sous la forme d'un signal discret.

Les étapes 100 et 102 sont répétées de sorte à générer et mémoriser un ou plusieurs signaux de fréquence Doppler de référence.

On peut par exemple prévoir que différents signaux de référence soient générés à partir des mêmes équations, en choisissant néanmoins des valeurs différentes pour au moins un paramètre.

Un tel paramètre peut par exemple être la résistance du vent. Ainsi, on dispose d'un jeu de signaux de références applicables à différentes configurations de vent.

*Phase d'acquisition*

Dans une étape 200, le récepteur Doppler 1 acquiert un signal de fréquence Doppler caractérisant la vitesse radiale de la cible O.

Le signal de fréquence Doppler est reçu par l'entrée principale 4 de l'unité de traitement de signal 3. Il s'agit d'un signal radiofréquence analogique.

Dans une étape 202, le mélangeur 10 en quadrature génère, à partir du signal de fréquence Doppler analogique reçu par l'entrée 4, deux composantes de signal : une composante en phase, et une composante en quadrature.

Dans une étape 204, La composante en phase est délivrée sur la voie en phase, et le filtre 14 applique un filtrage passe-bas à cette composante en phase ; parallèlement, la composante en quadrature est délivrée sur la voie en quadrature, et le filtre 16 applique un filtrage passe-bas à cette composante en quadrature.

Dans une étape 206 de numérisation, les deux convertisseurs analogique-numériques 18, 20 produisent à la cadence Fech deux signaux numériques I(t), Q(t) à partir des deux signaux délivrés par les deux filtres passe-bas 14, 16 agencés sur les voies en phase et en quadrature.

Les signaux I(t) et Q(t) sont définis par une fréquence d'échantillonnage supérieure à la fréquence d'échantillonnage de chacune des signaux de référence Fi mémorisés.

Dans une étape 208, le bloc complexe 22 produit un signal représentatif du signal complexe C(t) = I(t) + jQ(t) à partir des signaux numériques en phase I(t) et en quadrature Q(t), ou j désigne l'unité imaginaire.

Par ailleurs, dans une étape 210, l'interpolateur 24 produit, à partir d'un signal de référence Fi lu dans la mémoire 2 via l'entrée auxiliaire 5, un signal interpolé Fm(t) à une fréquence égale à la fréquence d'échantillonnage du signal reçu du récepteur Doppler 1 via l'entrée principale 4.

Dans une étape 212, la phase du signal interpolé Fm(t) est intégrée par l'oscillateur contrôlé en numérique 26 en un signal de la forme suivante :

$$F(t) = 2\pi \int Fm(t)dt$$

L'oscillateur contrôlé en fréquence 26 fournit au multiplicateur complexe 28 un signal complexe de la forme $e^{jF(t)}$ où j désigne l'unité imaginaire.

Dans une étape 214, le multiplicateur complexe 28 calcule la multiplication du signal exponentiel fourni par l'oscillateur contrôlé en numérique 24, par le signal complexe C(t) fourni par le bloc complexe 22.

En pratique, la multiplication complexe peut être implémentée par:

une multiplication entre les composantes I(t) et Q(t) du signal de fréquence Doppler acquis et les cosinus et sinus du signal F(t) :

$$I(t)\cos\big(F(t)\big) - Q(t).\sin\big(f(t)\big) + j\big[I(t).\sin\big(F(t)\big) + Q(t).\cos\big(F(t)\big)\big]$$

Dans une étape 216, le signal délivré par le multiplicateur complexe 82 est filtré par le filtre numérique 30 de sorte à produire un signal réel ou complexe filtré.

On appelle signal de battement le signal réel ou complexe produit par le filtre 30.

Le signal de battement est représentatif d'un écart de fréquence entre le signal de fréquence Doppler acquis par le récepteur 1 et le signal de fréquence Doppler de référence Fi mémorisé dans la mémoire 2.

Dans une étape 218, le signal de battement fait l'objet d'un traitement de décimation par le décimateur 32, de sorte à produire un signal réel ou complexe « décimé ».

Le bloc de décimation 32 applique en outre un fenêtrage au signal décimé, par exemple un fenêtrage de Hamming ou de Gauss.

Dans une étape 220, le bloc TFCR 34 applique une transformée de Fourier au bloc d'échantillons sélectionné par le fenêtrage, pour produire un spectre fréquentiel du signal de battement.

La transformée de Fourier appliquée est du type « Transformée de Fourier rapide » (FFT), réelle ou complexe.

Une transformée de Fourier est appliquée au cours de l'étape 220 successivement à différents blocs d'échantillons extraits du signal de battement, chaque bloc comprenant des échantillons en commun avec un bloc précédent. On peut par exemple prévoir au moins 50% d'échantillons en commun entre deux blocs successifs d'échantillons.

La taille en nombre d'échantillons du signal fourni par la transformée de Fourier joue un rôle important.

Plus cette taille est longue, plus la mesure est précise et plus le bruit de mesure diminue, plus il est possible de mesurer la vitesse d'un projectile éloigné, et plus il est possible de discerner deux trajectoires de vitesse proches (pouvoir séparateur élevé).

Il est donc a priori intéressant de mettre en œuvre des transformée de Fourier de très grande taille.

Cependant, une transformée de Fourier de grande taille, $2^N$, est inadaptée à une cible soumise à de fortes décélérations.

Certains obus peuvent par exemple atteindre une décélération maximale de -60m/s$^2$; une telle valeur de décélération occasionne une dérive de vitesse ($2^N$/Fech*60) et de fréquence Doppler qui a pour conséquence que le spectre déteint sur plusieurs quantum Doppler (ou « bins »). Tous les bénéfices précités d'une transformée de Fourier de grande longueur sont alors perdus (portée, précision, pouvoir séparateur).

En d'autres termes, plus la taille de la transformée de Fourier est courte, moins la mesure est sensible à la décélération du projectile.

De préférence, on choisit la taille de transformée de Fourier entre 2048 et 32768.

La taille de 2048 permet d'obtenir des performances nominales en présence d'un glissement Doppler de 100m/s$^2$.

La taille de 32768 permet d'obtenir des performances nominales en présence d'un glissement Doppler de 10m/s$^2$.

L'intervalle de valeurs [2048, 32768] permet donc de fournir des bonne performances pour la plupart des obus, qui s'opposent à la résistance de l'air.

On peut par exemple limiter ainsi la taille de transformée de Fourier de 4096 échantillons pour des performances nominales en présence d'un glissement Doppler de -60m/s$^2$.

Le spectre fréquentiel résultant de la transformée de Fourier est un signal discret. Ce signal peut être représenté par une série de points, les coordonnées de chaque point étant un couple (fréquence, puissance).

Par convention, on appelle « quantum » une valeur de fréquence ou emplacement de fréquence en abscisse d'un point issu de la transformée de Fourier du le signal discret obtenu par la transformée de Fourier.

Dans une étape 221, on détecte un pic de puissance Doppler présent dans le spectre fréquentiel obtenu par l'application de la transformée de Fourier.

Le pic de puissance est un point constituant un maximum local : c'est-à-dire que la valeur de puissance de ce point est supérieure aux valeurs des deux points ayant des quantums immédiatement voisins au quantum de ce point.

Dans une étape 222, la courbe du spectre issue de la transformée de Fourier est interpolée par l'interpolateur 36 en à l'aide du maximum local détecté au cours de l'étape 221 afin d'obtenir un signal de fréquence Doppler Fd(t) de l'écho recherché.

Les deux points de quantums voisins à celui du maximum local peuvent également intervenir dans le calcul d'interpolation 222.

Dans une étape 224, l'additionneur 38 additionne le spectre fréquentiel Δf(t) interpolé par l'interpolateur 36 au signal de référence Fi reçu par l'entrée secondaire 5. Le résultat de cette addition constitue un spectre fréquentiel de sortie, lequel est délivré sur la sortie 6 de l'unité de traitement de signal 3.

Le spectre fréquentiel de sortie peut ensuite être utilisé comme donnée d'entrée pour restituer la vitesse de l'écho recherché Vd(t)=Fd(t)*c'/Fo/2.

Une telle estimation d'un signal de vitesse à partir du spectre fréquentielle est connue de l'état de la technique, notamment du document « Introduction To Radar Systems » par Merrill I. Skolnik Mc Graw Hill Editions 1980 equ. 3.2a §3.1 p.69.

Les traitements opérés par l'unité de traitement sont répétés dans le temps pour différents signaux radiofréquence acquis successivement par le récepteur Doppler 1.

## Revendications

1. Procédé de suivi d'une cible mobile, comprenant des étapes de :

    • acquisition (200) d'un signal de fréquence Doppler caractérisant la vitesse radiale de la cible,
    • génération (100) d'au moins un signal de fréquence Doppler de référence à partir d'au moins une évolution temporelle attendue de la fréquence Doppler, l'évolution temporelle attendue de la fréquence Doppler étant calculée à partir d'un modèle cinématique de la cible,
    • génération (214, 216) d'un signal de battement entre le signal de fréquence Doppler acquis et chaque signal de fréquence Doppler de référence, chaque signal de battement étant représentatif d'un écart de fréquence entre le signal de fréquence Doppler mesuré et le signal de fréquence Doppler de référence correspondant,
    • application (220) au signal de battement d'au moins une transformée de Fourier produisant un spectre fréquentiel du signal de battement,
    • estimation d'un signal de vitesse de la cible à partir du spectre fréquentiel,

    dans lequel l'évolution temporelle attendue est déterminée avant l'acquisition (200) du signal de fréquence Doppler.

2. Procédé selon la revendication 1, dans lequel le modèle cinématique est défini par des équations différentielles faisant intervenir la position, la vitesse et/ou l'accélération de la cible en fonction du temps, et dont la résolution permet de prédire l'évolution de la fréquence Doppler en fonction de conditions initiales.

3. Procédé selon l'une des revendications 1 et 2, dans lequel la génération du signal de battement comprend une multiplication (214) réelle ou complexe entre le signal de fréquence Doppler acquis et un signal dont la phase résulte d'une intégration du signal de fréquence Doppler de référence.

4. Procédé selon la revendication 3, dans lequel la génération du signal de battement complexe comprend un filtrage passe-bas (30) appliqué à au moins une composante du signal résultant de la multiplication réelle ou complexe, le filtrage étant adapté pour conserver uniquement les fréquences représentatives d'un écart entre les deux signaux de fréquence Doppler.

5. Procédé selon l'une des revendications 1 à 4, comprenant un échantillonnage du signal de battement avant l'application de la transformée de Fourier.

6. Procédé selon l'une des revendications 1 à 5, comprenant un fenêtrage du signal de battement produisant un bloc d'échantillons du signal de battement, la transformée de Fourier étant appliquée sélectivement au bloc d'échantillons produit par le fenêtrage.

7. Procédé selon l'une des revendications 1 à 6, comprenant en outre la détection (221) d'un pic de puissance Doppler présent dans le spectre fréquentiel obtenu par l'application de la transformée de Fourier, le signal de vitesse de la cible étant estimé à partir des coordonnées du pic de puissance Doppler détecté.

8. Procédé selon l'une des revendications 1 à 7, dans lequel la transformée de Fourier est appliquée successivement à différents blocs d'échantillons extraits du signal de battement, chaque bloc comprenant des échantillons en commun avec un bloc précédent.

9. Procédé selon l'une des revendications 1 à 8, dans lequel le signal de référence est un signal discret.

10. Procédé selon la revendication 9, dans lequel le signal de fréquence Doppler acquis est un signal discret défini par une première fréquence d'échantillonnage et le signal de fréquence Doppler de référence est un signal discret défini par une deuxième fréquence d'échantillonnage inférieure à la première fréquence d'échantillonnage, le signal de fréquence Doppler de référence étant interpolé pour produire un nouveau signal de fréquence Doppler à partir duquel est généré le signal de battement à la première fréquence d'échantillonnage.

11. Dispositif de suivi d'une cible mobile, comprenant :

   • un récepteur Doppler (1) adapté pour acquérir un signal de fréquence Doppler caractérisant la vitesse radiale de la cible,
   • une mémoire (2) mémorisant, avant l'acquisition du signal Doppler par le récepteur Doppler (1), au moins une évolution temporelle attendue de la fréquence Doppler, l'évolution temporelle étant calculée à partir d'un modèle cinématique de la cible,
   • une unité de traitement de signal (3) adaptée pour :

      ○ générer au moins un signal de fréquence Doppler de référence à partir de l'évolution temporelle mémorisée,
      ○ générer un signal de battement entre un signal de fréquence Doppler acquis par le récepteur et chaque signal de fréquence Doppler de référence, chaque signal de battement étant représentatif d'un écart de fréquence entre le signal de fréquence Doppler acquis et le signal de fréquence Doppler de référence correspondant,
      ○ appliquer au signal de battement au moins une transformée de Fourier produisant un spectre fréquentiel du signal de battement,
      ○ estimer un signal de vitesse de la cible à partir du spectre fréquentiel.

## Patentansprüche

1. Verfahren zum Verfolgen eines sich bewegenden Ziels, das Schritte umfasst des:

   • Erfassens (200) eines Dopplerfrequenz-Signals, das die radiale Geschwindigkeit des Ziels charakterisiert,
   • Generierens (100) mindestens eines Dopplerfrequenz-Referenzsignals auf Grundlage mindestens einer erwarteten zeitlichen Entwicklung der Dopplerfrequenz, wobei die erwartete zeitliche Entwicklung der Dopplerfrequenz auf Grundlage eines kinematischen Modells des Ziels berechnet wird,
   • Generierens (214, 216) eines Schwebungssignals zwischen dem erfassten Dopplerfrequenz-Signal und jedem Dopplerfrequenz-Referenzsignal, wobei jedes Schwebungssignal für einen Frequenzabstand zwischen dem gemessenen Dopplerfrequenz-Signal und dem entsprechenden Dopplerfrequenz-Referenzsignal repräsentativ ist,
   • Anwendens (220) mindestens einer Fourier-Transformation auf das Schwebungssignal, die ein Frequenzspektrum des Schwebungssignals erzeugt,
   • Schätzens eines Geschwindigkeitssignals des Ziels auf Grundlage des Frequenzspektrums,

   wobei die erwartete zeitliche Entwicklung vor dem Erfassen (200) des Dopplerfrequenz-Signals bestimmt wird.

2. Verfahren nach Anspruch 1, wobei das kinematische Modell durch Differentialgleichungen definiert wird, die die Position, die Geschwindigkeit und/oder die Beschleunigung des Ziels in Abhängigkeit von der Zeit einbeziehen, und deren Lösung es ermöglicht, die Entwicklung der Dopplerfrequenz in Abhängigkeit von Anfangsbedingungen vorherzusagen.

3. Verfahren nach einem der Ansprüche 1 und 2, wobei das Generieren des Schwebungssignals eine reelle oder komplexe Multiplikation (214) zwischen dem erfassten Dopplerfrequenz-Signal und einem Signal umfasst, dessen Phase aus einer Integration des Dopplerfrequenz-Referenzsignals resultiert.

4.  Verfahren nach Anspruch 3, wobei das Generieren des komplexen Schwebungssignals eine Tiefpassfilterung (30) umfasst, die auf mindestens eine Komponente des Signals, das aus der reellen oder komplexen Multiplikation resultiert, angewendet wird, wobei die Filterung dafür geeignet ist, nur die Frequenzen zurückzubehalten, die für einen Abstand zwischen den zwei Dopplerfrequenz-Signalen repräsentativ sind.

5.  Verfahren nach einem der Ansprüche 1 bis 4, das vor dem Anwenden der Fourier-Transformation ein Abtasten des Schwebungssignals umfasst.

6.  Verfahren nach einem der Ansprüche 1 bis 5, das ein Fenstern des Schwebungssignals umfasst, das einen Block von Abtastungen des Schwebungssignals erzeugt, wobei die Fourier-Transformation selektiv auf den durch das Fenstern erzeugten Abtastungsblock angewendet wird.

7.  Verfahren nach einem der Ansprüche 1 bis 6, das weiter das Detektieren (221) einer Doppler-Leistungsspitze umfasst, die in dem durch das Anwenden der Fourier-Transformation erhaltenen Frequenzspektrum vorliegt, wobei das Geschwindigkeitssignal des Ziels auf Grundlage der Koordinaten der detektierten Doppler-Leistungsspitze geschätzt wird.

8.  Verfahren nach einem der Ansprüche 1 bis 7, wobei die Fourier-Transformation nacheinander auf unterschiedliche Abtastungsblöcke angewendet wird, die aus dem Schwebungssignal extrahiert wurden, wobei jeder Block gemeinsame Abtastungen mit einem vorausgehenden Block umfasst.

9.  Verfahren nach einem der Ansprüche 1 bis 8, wobei es sich beim Referenzsignal um ein diskretes Signal handelt.

10. Verfahren nach Anspruch 9, wobei es sich beim erfassten Dopplerfrequenz-Signal um ein diskretes Signal handelt, das durch eine erste Abtastfrequenz definiert wird, und es sich beim Dopplerfrequenz-Referenzsignal um ein diskretes Signal handelt, das durch eine zweite Abtastfrequenz definiert wird, die kleiner ist als die erste Abtastfrequenz, wobei das Dopplerfrequenz-Referenzsignal interpoliert wird, um ein neues Dopplerfrequenz-Signal zu erzeugen, auf dessen Grundlage das Schwebungssignal bei der ersten Abtastfrequenz generiert wird.

11. Vorrichtung zum Verfolgen eines sich bewegenden Ziels, umfassend:

    • einen Doppler-Empfänger (1), der dafür geeignet ist, ein Dopplerfrequenz-Signal zu erfassen, das die radiale Geschwindigkeit des Ziels charakterisiert,
    • einen Speicher (2), der vor dem Erfassen des Doppler-Signals durch den Doppler-Empfänger (1) mindestens eine erwartete zeitliche Entwicklung der Dopplerfrequenz speichert, wobei die zeitliche Entwicklung auf Grundlage eines kinematischen Modells des Ziels berechnet wird,
    • eine Signalverarbeitungseinheit (3), die dafür geeignet ist:

        o auf Grundlage der gespeicherten zeitlichen Entwicklung mindestens ein Dopplerfrequenz-Referenzsignal zu generieren,
        o ein Schwebungssignal zwischen einem vom Empfänger erfassten Dopplerfrequenz-Signal und jedem Dopplerfrequenz-Referenzsignal zu erzeugen, wobei jedes Schwebungssignal für einen Frequenzabstand zwischen dem erfassten Dopplerfrequenz-Signal und dem entsprechenden Dopplerfrequenz-Referenzsignal repräsentativ ist,
        o mindestens eine Fourier-Transformation auf das Schwebungssignal anzuwenden, die ein Frequenzspektrum des Schwebungssignals erzeugt,
        o auf Grundlage des Frequenzspektrums ein Geschwindigkeitssignal des Ziels zu schätzen.

## Claims

1.  Method for tracking a moving target, comprising the steps of:

    • acquiring (200) a Doppler frequency signal characterising the radial speed of the target,
    • generating (100) at least one reference Doppler frequency signal using at least one expected temporal change in the Doppler frequency, the expected temporal change in the Doppler frequency being calculated using a kinematic model of the target,
    • generating (214, 216) a beat signal between the acquired Doppler frequency signal and each reference Doppler frequency signal, each beat signal representing a frequency difference between the measured Doppler frequency signal and the corresponding reference Doppler frequency signal,
• applying (220) to the beat signal at least one Fourier transform producing a frequency spectrum of the beat signal,
• estimating a speed signal of the target using the frequency spectrum,

wherein the expected temporal change is determined before the acquisition (200) of the Doppler frequency signal.

2. Method according to claim 1, wherein the kinematic model is defined by differential equations involving the position, speed and/or acceleration of the target according to time, and of which the resolution makes it possible to predict the change in the Doppler frequency according to the initial conditions.

3. Method according to one of claims 1 and 2, wherein generating the beat signal comprises a real or complex multiplication (214) between the acquired Doppler frequency signal and a signal of which the phase results from an integration of the reference Doppler frequency signal.

4. Method according to claim 3, wherein generating the complex beat signal comprises a low-pass filtering (30) applied to at least one component of the signal resulting from the real or complex multiplication, the filtering being adapted to retain only the frequencies that represent a difference between the two Doppler frequency signals.

5. Method according to one of claims 1 to 4, comprising sampling the beat signal before applying the Fourier transform.

6. Method according to one of claims 1 to 5, comprising windowing the beat signal producing a block of samples of the beat signal, the Fourier transform being applied selectively to the block of samples produced by the windowing.

7. Method according to one of claims 1 to 6, further comprising detecting (221) a Doppler power peak present in the frequency spectrum obtained by applying the Fourier transform, the speed signal of the target being estimated using coordinates of the detected Doppler power peak.

8. Method according to one of claims 1 to 7, wherein the Fourier transform is successively applied to different blocks of samples extracted from the beat signal, each block comprising samples in common with a preceding block.

9. Method according to one of claims 1 to 8, wherein the reference signal is a discrete signal.

10. Method according to claim 9, wherein the acquired Doppler frequency signal is a discrete signal defined by a first sampling frequency and the reference Doppler frequency signal is a discrete signal defined by a second sampling frequency less than the first sampling frequency, the reference Doppler frequency signal being interpolated to produce a new Doppler frequency signal from which the beat signal is generated at the first sampling frequency.

11. Device for tracking a moving target, comprising:

• a Doppler receiver (1) adapted to acquire a Doppler frequency signal characterising the radial speed of the target,
• a memory (2) memorising, before the acquisition of the Doppler signal by the Doppler receiver (1), at least one expected temporal change in the Doppler frequency, the temporal change being calculated using a kinematic model of the target,
• a signal processing unit (3) adapted to:

o generate at least one reference Doppler frequency signal using the memorised temporal change,
o generate a beat signal between a Doppler frequency signal acquired by the receiver and each reference Doppler frequency signal, each beat signal representing a frequency difference between the acquired Doppler frequency signal and the corresponding reference Doppler frequency signal,
o apply to the beat signal at least one Fourier transform producing a frequency spectrum of the beat signal,
o estimate a speed signal of the target using the frequency spectrum.

FIG. 1

**FIG. 2**

Fi

5

Filtre — 30

Exp(jF(t))

OCN — 26

X — 28

C(t)

Interpolateur — 24

Fm(t)

22

I(t)

Q(t)

CAN — 18

CAN — 20

14

16

12

10

4

Décimateur — 32

TFCR — 34

Interpolateur — 36

ΔF(t)

+ — 38

6

| | |
|---|---|
| Génération signal de référence | 100 |
| mémorisation | 102 |
| Interpolation | 210 |
| Intégration | 212 |

| | |
|---|---|
| acquisition | 200 |
| mélange | 202 |
| Filtrage passe bas | 204 |
| Numérisation | 206 |
| Calcul de signal complexe | 208 |
| Multiplication | 214 |
| Filtrage | 216 |
| Décimation | 218 |
| FFT | 220 |
| Détection | 221 |
| Interpolation | 222 |
| Addition | 224 |

FIG. 3

**RÉFÉRENCES CITÉES DANS LA DESCRIPTION**

**Documents brevets cités dans la description**

- EP 0395480 A

- WO 2006087421 A

**Littérature non-brevet citée dans la description**

- **JUSSI MARKKANEN.** *Towards Routine real-time space debris measurements with EISCAT*

- Introduction To Radar Systems. 1980, 69